(19) Europäisches Patentamt
European Patent Office
Office européen des brevets

(11) Veröffentlichungsnummer: **0 398 022 A1**

# (12) EUROPÄISCHE PATENTANMELDUNG

(21) Anmeldenummer: **90107042.5**

(51) Int. Cl.5: **B01D 17/05**

(22) Anmeldetag: **12.04.90**

Die Bezeichnung der Erfindung wurde geändert (Richtlinien für die Prüfung im EPA, A-III, 7.3).

(30) Priorität: **20.04.89 DE 3912929**

(43) Veröffentlichungstag der Anmeldung:
**22.11.90 Patentblatt 90/47**

(84) Benannte Vertragsstaaten:
**GR**

(71) Anmelder: **Chemische Fabrik Stockhausen GmbH**
**Bäkerpfad 25**
**D-4150 Krefeld(DE)**

(72) Erfinder: **Akyel, Haluk, Dipl.Chem.**
**Am Flohbusch 2**
**D-4150 Krefeld(DE)**
Erfinder: **Landscheidt, Alfons, Dr., Dipl.-Chem.**
**Lefarthstrasse 11**
**D-4150 Krefeld(DE)**

(74) Vertreter: **Klöpsch, Gerald, Dr.-Ing.**
**Patentanwälte Klöpsch & Flaccus**
**An Gross St. Martin 6**
**D-5000 Köln 1(DE)**

## (54) Verfahren zur Trennung von Öl-in-Wasser-Emulsionen.

(57) Die Erfindung betrifft ein Verfahren zur Spaltung von Öl/Wasser-Emulsionen durch Zusatz von kationischen Polymeren, das dadurch gekennzeichnet ist, daß der zu spaltenden Öl/Wasser-Emulsion ein synthetisches organisches kationisches Polymer aus

a) 5 bis 70 Gew.-% eines Monomers der allgemeinen Formel

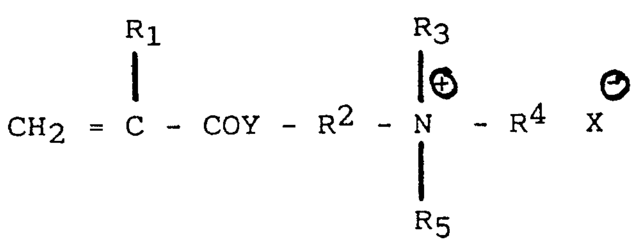

(I)

worin
$R_1$ -H oder $-CH_3$,
Y -O- oder -NH-,
$R_2$ eine geradkettige oder verzweigte Alkylengruppe mit 2 bis 6 C-Atomen,
$R_3$, $R_4$ $-CH_3$ oder $-CH_2-CH_3$,
$R_5$ einen alkylenaromatischen Rest
X $Cl^-$, $CH_3SO_4^-$
bedeuten,

b) 20 bis 95 % Acrylamid und

c) 0 bis 10 % eines anderen wasserlöslichen Monomeren zugesetzt wird.

EP 0 398 022 A1

## Verfahren zur Trennung von Öl-in-Wasser-Emulsion

Die Erfindung betrifft ein Verfahren zur Trennung von Öl-/Wasser-Emulsionen.

Öl-/Wasser-Emulsionen fallen häufig als verunreinigte Produktströme an, die neben organischen Stoffen, wie z.B. Mineralölen, pflanzlichen Ölen, tierischen Ölen, bzw. Fetten in emulgierter Form auch solche in nicht emulgierter Form sowie Feststoffpartikel enthalten.

Diese Gemische fallen beispielsweise bei der Gewinnung des Erdöls, bei seinem Transport mit Tankern oder mittels Pipelines und im Verlaufe der Verarbeitung in Erdölraffinerien an.

Auch in der metallverarbeitenden Industrie, Automobilindustrie, bei Lebensmittelherstellern, sowie in Werkstätten und an Tankstellen fallen häufig mit Öl oder Fett verschmutzte Abwässer an, die zu der Gruppe der stark belasteten Abwässer zählen und für Kläranlagen große Probleme darstellen. Es ist daher zwingend erforderlich, solche Abwässer vorher nach speziellen Methoden zu reinigen und sie erst nach einer solchen Vorreinigungsstufe in den Vorfluter oder in die Kläranlagen zu leiten.

Bekannte Trennverfahren sind beispielsweise Flotation, Filtration, Adsorption sowie Sedimentation. Zunächst muß bei allen diesen Verfahren, die im Wasser emulgiert vorliegende organische Phase in die "freie" Form überführt werden. Dieser Vorgang wird als "Emulsionsspaltung" bezeichnet.

Je nach Art der Emulsionen und nach Art von Begleit- bzw. Inhaltsstoffen der Emulsion können diese sehr stabil sein. Für eine physikalische Flüssig-Flüssig-Phasentrennung muß auf jeden Fall zunächst die Emulsion gebrochen werden. Bei instabilen Emulsionen kann es bei längerem Stehen und/oder beim Erwärmen zu einer Phasentrennung kommen. Die mit Emulgatoren stabilisierten Emulsionen müssen für die Spaltung mit chemischen Mitteln behandelt werden, um die in wäßriger Phase elektrostatisch aufgeladenen, sehr feinen organischen flüssigen Partikel weitgehend zu entladen. In diesem Fall werden die gegenseitigen Abstoßkräfte zwischen den im Wasser emulgierten organischen Partikeln aufgehoben, und es kommt zu einer Zusammenballung der feinen Tröpfchen und über eine Tropfenvergrößerung letzlich zu einer Spaltung der Emulsion.

Ölpartikel in einer wäßrigen Emulsion sind in der Regel negativ aufgeladen. Zur Erreichung des isoelektrischen Punktes werden der Emulsion Kationen zugesetzt. Neben den anorganischen Salzen wie zum Beispiel Eisen-III- oder Aluminiumsalzen, sowie Säuren werden auch organische wasserlösliche kationische Polymere mit unterschiedlicher Kettenlänge bzw. Molekulargewicht zu dem gleichen Zweck als Emulsionspalter eingesetzt.

Sowohl kationische als auch anionische wasserlösliche Polymere werden zur Reinigung ölhaltiger Abwässer häufig in Kombination mit Eisen- oder Aluminumsalzen zum Einsatz gebracht. Entsprechende Reinigungsverfahren werden in der Praxis im allgemeinen in Flotationsanlagen verschiedenen Typs, wie z.B. Entspannungsflotation, mechanischer Flotation u.s.w. durchgeführt.

In der DE-OS 19 26 623 wird ein Verfahren zum Abscheiden von Öl aus stabilen Öl-in-Wasser-Emulsionen beschrieben, bei dem die Emulsion mit einem Eisensalz und Natronlauge versetzt und anschließend mit einem hochmolekularen, wasserlöslichen Polymer auf der Basis von Polyacrylsäure, Polyacrylamid, Polyvinylalkohol und Polyethylenoxid nachbehandelt wird.

In der DE-OS 28 41 122 wird die Anwendung von kationischen, anionischen oder nichtionogenen Polymeren allein oder in Kombination mit Metallsalzen zur Abwasserreinigung beschrieben. Als kationische Polymertypen werden Polyamide, Polyamine und Mischpolymerisate von Acrylamid mit quaternären Ammoniumpolyacrylamiden genannt.

In der US-PS 3,691,086 wird ein Verfahren unter Anwendung von kationischen Polymerisaten für die Öl/Wasser-Trennung beschrieben, bei dem die Polymerisate bevorzugt in Verbindung mit einem Silicasol und einem mehrwertigen Metallsalz eingesetzt werden. Polymere gemäß dieser US-PS 3,691,086 werden in den Vergleichsbeispielen A - F den erfindungsgemäßen Polymeren gegenübergestellt, um zu zeigen, daß mit den erfindungsgemäßen Produkten eine qualitativ und quantitativ bessere Trennung erhalten wird.

In "Chemical Abstracts, Vol.105 (1986) Referat-Nr. 116866c und 116867d werden bereits Copolymere aus den Monomeren Acrylamid und Acryloyloxiethyldimethybenzylammoniumsalz und ihre Verwendung als Retentionsmittel bei der Papierherstellung beschrieben.

Die aus dem Stand der Technik bekannten Verfahren und Mittel zur Emulsionsspaltung ergeben keine ausreichende Trennwirkung zwischen organischer Phase und Wasser. Entsprechend liegt der vorliegenden Erfindung die Aufgabe zugrunde, die Emulsionsspaltwirkung durch Bereitstellung eines verbesserten Mittels zur Emulsionsspaltung zu vervollständigen und ein Verfahren bereitzustellen, daß zu einer befriedigenden Trennwirkung sowohl in Flotationsanlagen als auch in statischen Trennvorrichtungen führt.

In der Praxis liegen häufig Öl-Wasser-Trennprobleme vor, die eine Trennung ohne irgendeine Flotationsanlage beim einfachen Stehenlassen der Emulsion - beispielsweise in ein Tank oder einem Plattenseparator - erfolgen soll. Häufig treten derartige Fälle bei "offshore"-Erdölgewinnungsstellen auf, wo die Bereitstellung eines Emulsionsspalters für Öl-in-Wasser-Emulsionen, der eine Spaltung ohne Energieeintrag in das Abwasser wie bei der mechanischen Flotation und ohne Einsatz anorganischer Salze bewerkstelligt, ein dringliches Anliegen gewesen ist.

Überraschend wurde gefunden, daß die erfindungsgemäße Aufgabe gelöst wird durch die Verwendung eines synthetischen organischen, kationischen Polymeren, aus

a) 5 bis 70 Gew.-% eines Monomers der allgemeinen Formel

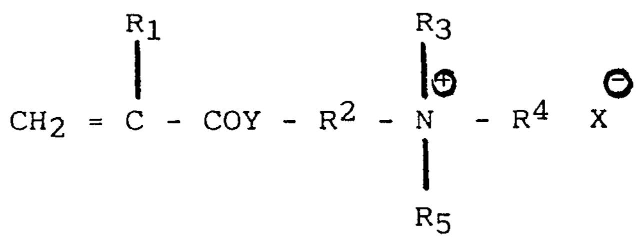

(I)

worin

$R_1$ -H oder $-CH_3$,

Y -O- oder -NH-,

$R_2$ eine geradkettige oder verzweigte Alkylengruppe mit 2 bis 6 C-Atomen,

$R_3$, $R_4$ $-CH_3$ oder $-CH_2-CH_3$,

$R_5$ einen alkylenaromatischen Rest

X $Cl^-$,$CH_3SO_4^-$

bedeuten,

b) 20 bis 95 % Acrylamid und

c) 0 bis 10 % eines anderen wasserlöslichen Monomeren z.B. Methacrylamid, (Meth)Acrylsäure, Vinylpyrrolidon, Dimethyldiallylammoniumchlorid, Acrylamidomethylpropansulfonsäure, N,N-Dimethylacrylamid, Vinylacetamid oder Vinylformamid.

Durch Zusatz eines kationischen Polymeren der vorstehend genannten Zusammensetzung in einer Menge von 0,1 bis 50 Gew.-%, bevorzugt von 1 bis 20 Gew.-% , bezogen auf den organischen Anteil der Öl/Wasser-Emulsion wird eine Aufspaltung dieser Öl/Wasser-Emulsion erreicht. Das kationische Polymer kann der zu spaltenden Öl/Wasser-Emulsion in Form einer Emulsion, in Pulverform oder in Form einer wässrigen Lösung zugesetzt werden. Die dritte wasserlösliche Monomerkomponente c) kann vorzugsweise Acrylsäure oder N-Vinylpyrrolidon sein.

Als basische Monomere a), die mit dem Rest $R_5$ gemäß oben genannter Definition quaternisiert werden können, sind insbesondere zu nennen:

Dimethylaminoethylacrylat, Dimethylaminoethylmethacrylat, Dimethylaminopropylacrylamid, Dimethylaminopropylmethacrylamid, Diethylaminoethylacrylat, Dimethylamino-2,2-dimethyl-propylacrylamid.

Im Rahmen der vorliegenden Erfindung wurde überraschend gefunden, daß die emulsionspaltende Wirkung dieser kationischen Poly-Quat-Typen sehr stark von der Quaternisierungskomponente, d.h. der Art des Substituenten $R_5$ der allgemeinen Formel I, abhängt.

Die vorteilhaften Ergebnisse gemäß der Erfindung werden erzielt, wenn als $R_5$ ein Alkylenaromatenrest wie insbesondere die Benzylgruppe als Substituent am quartären Stickstoffatom vorliegt.

Zur Veranschaulichung der Erfindung wurden verschiedene kationische Polymere auf ihre emulsionsspaltende Wirkung untersucht. Als Modellemulsion wurde hierzu das Abwasser einer Erdölraffinerie in zwei Versuchsreihen einerseits mit bekannten Produkten behandelt, die $R_5 = CH_3$ als kennzeichnendes Strukturmerkmal aufweisen (bezeichnet als "Vergleichsprodukt") und andererseits mit dem erfindungsgemäßen Produkt des gleichen Grundkörpers, welches sich von dem Vergleichsprodukt dadurch unterscheidet, daß der Rest $R_5$ in der allgemeinen Formel I ein Alkylenaromat entsprechend der Definition des Hauptanspruchs ist. Beispielhaft wurden Untersuchungen mit $R_5$ = Benzyl durchgeführt. Als Vergleichsprodukte E und F wurden Homopolymerisate des in der US-PS 3,691,086 beschriebenen Art eingesetzt.

Im einzelnen wurden folgende Produkte untersucht:

Vergleichsprodukt A: Copolymerisat, bestehend aus 25 Gew.-% N-(Dimethylamino-Propyl)-Acrylamid, quaternisiert mit Methylchlorid und 75 Gew.-% Acrylamid.

Produkt A: Copolymerisat, bestehend aus 25 Gew.-% N-(Dimethylamino-Propyl)-Acrylamid, quaternisiert mit Benzylchlorid und 75 Gew.-% Acrylamid.

Vergleichsprodukt B: Copolymerisat, bestehend aus 70 Gew.-% N-(Dimethylamino-Propyl)-Acrylamid, quaternisiert mit Methylchlorid und 30 Gew.-% Acrylamid.

Produkt B: Copolymerisat, bestehend aus 70 Gew.-% N-(Dimethylamino-Propyl)-Acrylamid, quaternisiert mit Benzylchlorid und 30 Gew.-% Acrylamid.

Vergleichsprodukt C: Copolymerisat, bestehend aus 5 Gew.-% Dimethylaminoethylacrylat, quaternisiert mit Dimethylsulfat und 95 Gew.-% Acrylamid.

Produkt C: Copolymerisat, bestehend aus 5 Gew.-% Dimethylaminoethylacrylat, quaternisiert mit Benzylchlorid und 95 Gew.-% Acrylamid.

Vergleichsprodukt D: Copolymerisat, bestehend aus 50 Gew.-% Dimethylamino-2,2-dimethylpropyl-Acrylamid, quaternisiert mit Dimethylsulfat und 50 Gew.-% Acrylamid.

Produkt D: Copolymerisat, bestehend aus 50 Gew.-% Dimethylamino-2,2-dimethylpropyl-Acrylamid, quater nisiert mit Benzylchlorid und 50 Gew.-% Acrylamid.

Vergleichsprodukt E: Polymerisat, bestehend aus 100 Gew.-% Dimethylaminoethylmethacrylat, quaternisiert mit Methylchlorid.

Vergleichsprodukt F: Polymerisat, bestehend aus 100 Gew.-% Dimethylaminoethylmethacrylat, quaternisiert mit Benzylchlorid.

Nach Behandlung mit dem erfindungsgemäßen emulsionspaltenden kationischen Polymer wurden in dem gereinigten Wasser die Restölgehalte als schwerflüchtige lipophile Stoffe nach DIN 38409, Teil H 18, ermittelt.

Beispiel 1 (Versuchsreihe 1, statische Trennung)

Das Abwasser wurde in einem Becherglas mit jeweils 50 ppm der vorgenannten Vergleichsprodukte bzw. Produkte versetzt. Die Zugabe der Emulsionsspalter erfolgte aus einer 0,1 %igen wäßrigen Lösung. Die Proben wurden 60 Sekunden mit einem Fingerrührer bei 50 UpM gerührt. In dieser Zeit wurde die Emulsion gespalten, die organische Phase setzte sich bei anschließendem 30-minütigem Stehenlassen an der Wasseroberfläche ab. Die Bestimmung der Restölgehalte als schwerflüchtige lipophile Stoffe erfolgte für die untere wäßrige Phase.

Beispiel 2 (Versuchreihe 2, Flotation)

Das Abwasser wurde in einer 2-Liter-Laborflotationszelle, Typ KHD, vorgelegt. Beim Rühren bei 1.500 UpM und gleichzeitiger Lufteinleitung durch eine doppelwandige Welle wurden jeweils 5 ppm Emulsionspalter aus einer 0,1 %igen wäßrigen Lösungs zugegeben und anschließend 5 Minuten flotiert. Die mit dem Schaum ausgetragenen organischen Stoffe wurden von der Flotationszelle mittels eines Abstreifers abgetrennt. Das gereinigte Wasser wurde wie beschrieben nach DIN 38409, Teil H 18, untersucht.

Die Ergebnisse der Versuchsreihen nach den Beispielen 1 und 2 sind in den nachfolgenden Tabellen 1 und 2 dargestellt.

Tabelle 1:

| Ergebnisse der Versuchsreihe 1 (statische Trennung, Beispiel 1) | | |
|---|---|---|
| Versuch | Emulsionsspalter | Gehalte an schwerflüchtigen lipophilen Stoffen in mg/l nach DIN 38409, Teile H18 |
| 1 | ohen Zusatz | 68 |
| 2 | Vergleichsprodukt A | 36 |
| 3 | Produkt A | 13 |
| 4 | Vergleichsprodukt B | 28 |
| 5 | Produkt B | 12 |
| 6 | Vergleichsprodukt C | 32 |
| 7 | Produkt C | 10 |
| 8 | Vergleichsprodukt D | 35 |
| 9 | Produkt D | 10 |
| 10 | Vergleichsprodukt E | 28 |
| 11 | Vergleichsprodukt F | 29 |

Tabelle 2:

| Ergebnisse der Versuchsreihe 2 (Flotation, Beispiel 2) | | |
|---|---|---|
| Versuch | Emulsionsspalter | Gehalte an schwerflüchtigen lipophilen Stoffen in mg/l nach DIN 38409, Teile H18 |
| 1 | ohen Zusatz | 42 |
| 2 | Vergleichsprodukt A | 6 |
| 3 | Produkt A | 1 |
| 4 | Vergleichsprodukt B | 5 |
| 5 | Produkt B | 0,8 |
| 6 | Vergleichsprodukt C | 4 |
| 7 | Produkt C | 0,5 |
| 8 | Vergleichsprodukt D | 4,5 |
| 9 | Produkt D | 0,2 |
| 10 | Vergleichsprodukt E | 6 |
| 11 | Vergleichsprodukt F | 7 |

Die in den Tabellen 1 und 2 dargestellten Ergebnisse zeigen, daß bei Zugabe der erfindungsgemäß verwendeten kationischen Polymeren als Emulsionspalter ein um ein vielfaches geringerer Gehalt an schwerflüchtigen lipophilen Stoffen im Abwasser festgestellt werden kann.

Die Versuchsergebnisse mit den Vergleichsprodukten E und F zeigen, daß quarternierte Homopolymerisate, sowohl mit als auch ohne Benzylgruppierung wesentlich schlechtere Trennergebnisse liefern als die erfindungsgemäß verwendeten Copolymerisate.

## Ansprüche

1. Verfahren zur Spaltung von Öl/Wasser-Emulsionen durch Zusatz von kationischen Polymeren, dadurch gekennzeichnet, daß der zu spaltenden Öl/Wasser-Emulsion ein synthetisches organisches kationisches Polymer aus
a) 5 bis 70 Gew.-% eines Monomers der allgemeinen Formel

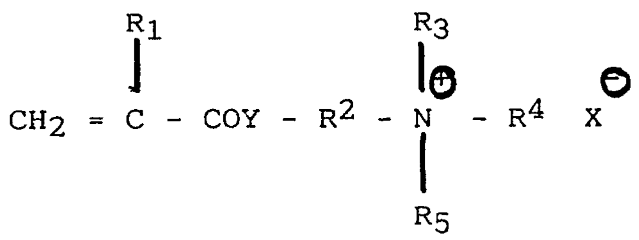

(I)

worin
$R_1$ -H oder $-CH_3$,
Y -O- oder -NH-,
$R_2$ eine geradkettige oder verzweigte Alkylengruppe mit 2 bis 6 C-Atomen,
$R_3$, $R_4$ $-CH_3$ oder $-CH_2-CH_3$,
$R_5$ einen alkylenaromatischen Rest
X Cl-,$CH_3SO_4^-$
bedeuten,
b) 20 bis 95 % Acrylamid und
c) 0 bis 10 % eines anderen wasserlöslichen Monomeren
zugesetzt wird.

2. Verfahren nach Anspruch 1, dadurch gekennzeichnet, daß ein kationisches Polymer eingesetzt wird, bei dem die Alkylengruppe $R_2$ der allgemeinen Formel (I) in gerader Kette 2 oder 3 C-Atome enthält.

3. Verfahren nach Anspruch 1 oder 2, dadurch gekennzeichnet, daß ein kationisches Polymer der allgemeinen Formel (I) verwendet wird, in der $R_5$ die Gruppe $CH_2C_6H_5$ bedeutet.

4. Verfahren nach Anspruch 1 oder 2, dadurch gekennzeichnet, daß das kationische Polymer der aufzuspaltenden Öl/Wasser-Emulsion in Form einer Emulsion, in Pulverform oder in Form einer wässrigen Lösung zugesetzt wird.

5. Verfahren nach Anspruch 1 oder 2, dadurch gekennzeichnet, daß das kationische Polymer in einer Menge von 0,1 bis 50 Gew.-% bezogen auf den organischen Anteil der Öl/Wasser-Emulsion zugesetzt wird.

6. Verfahren nach Anspruch 5, dadurch gekennzeichnet, daß das kationische Polymer in einer Menge von 1 bis 20 Gew.-%, bezogen auf den organischen Anteil der Öl/Wasser-Emulsion zugesetzt wird.

7. Verfahren nach einem der Ansprüche 1 oder 2, dadurch gekennzeichnet, daß es zur Abtrennung von Öl aus Abwässern eingesetzt wird.

8. Verfahren nach einem der Ansprüche 1 oder 2, dadurch gekennzeichnet, daß es sich um ein statisches oder dynamisches Trennverfahren handelt.

9. Verfahren nach einem der Ansprüche 1 oder 2, dadurch gekennzeichnet, daß es in Verbindung mit einer Flotationsstufe eingesetzt wird.

Europäisches Patentamt

# EUROPÄISCHER RECHERCHENBERICHT

Nummer der Anmeldung

EP 90 10 7042

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | CHEMICAL ABSTRACTS Band 105, Nr. 14, 6. Oktober 1986, Seite 102, Zusammenfassung Nr. 116866c & JP-A-6106398 (K. HONMA et al.) 13.01.1986 --- | 1-3 | B 01 D 17/05 |
| D,A | CHEMICAL ABSTRACTS Band 105, Nr. 14, 6. Oktober 1986, Seite 103, Zusammenfassung Nr. 116867d, Columbus, Ohio, US; & JP-A-6106397 (K. HONMA et al.) 13.01.1986 --- | 1-3 | |
| D,A | US-A-3 691 086 (R.D. LEES et al.) * Anspruch 1; Beispiele; Spalte 6, Zeile 8; Spalte 7, Zeilen 12-26; Spalte 9, Zeilen 14-22 * --- | 1-9 | |
| A | EP-A-0 007 259 (CALGON) * Ansprüche 1-5; Beispiele 1-4; Spalte 4, Zeilen 18-32 * --- | 1,2,4-9 | RECHERCHIERTE SACHGEBIETE (Int. Cl.5) |
| A | US-A-4 734 205 (D.F. JAQUES et al.) * Ansprüche 1,2 * --- | 1,2,4-8 | B 01 D 17/04<br>B 01 D 17/05<br>C 10 G 33/04 |
| A | US-A-4 179 549 * Ansprüche 1,2; Spalte 11, Zeilen 54-68 * ----- | 1,7,8 | |

Der vorliegende Recherchenbericht wurde für alle Patentansprüche erstellt

| Recherchenort | Abschlußdatum der Recherche | Prüfer |
|---|---|---|
| BERLIN | 22-06-1990 | KUEHN P |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)